**Europäisches Patentamt**

**European Patent Office**

**Office européen des brevets**

(19)

(11) Numéro de publication : **0 365 369 B1**

(12) **FASCICULE DE BREVET EUROPEEN**

(45) Date de publication du fascicule du brevet :
**22.07.92 Bulletin 92/30**

(51) Int. Cl.⁵ : **F16H 47/02**

(21) Numéro de dépôt : **89401955.3**

(22) Date de dépôt : **07.07.89**

(54) **Dispositif hydraulique fléxible pour l'entrainement des vehicules notamment utilitaires à une vitesse de marche relativement élevée.**

Jointe à la demande no. 89908189.7/0428545
(numéro de dépôt/numéro de publication de la
demande européenne) par décision du 10.07.91.

(30) Priorité : **12.07.88 FR 8809499**

(43) Date de publication de la demande :
**25.04.90 Bulletin 90/17**

(45) Mention de la délivrance du brevet :
**22.07.92 Bulletin 92/30**

(84) Etats contractants désignés :
**AT BE CH DE ES GB GR IT LI LU NL SE**

(56) Documents cités :
**FR-A- 2 167 697**
**FR-A- 2 186 065**
**FR-A- 2 381 218**
**Usine nouvelle numéro 49, du 06.12.84, page 13**

(73) Titulaire : **Benmoussa, Mohamed**
**Résidence le Pont du Cens 28, avenue José Maria Heredia**
**F-44300 Nantes (FR)**

(72) Inventeur : **Benmoussa, Mohamed**
**Résidence le Pont du Cens 28, avenue José Maria Heredia**
**F-44300 Nantes (FR)**

EP 0 365 369 B1

## Description

L'invention a pour objet un dispositif d'entrainement fléxible, déstiné de préférence mais non exclusivement aux véhicules particuliers et utilitaires,et comportant une transmission hydraulique intégrée composée essentiellement d'une pompe hydraulique à cylindrée variable entrainée par le moteur thermique du véhicule et d'un moteur hydraulique à cylindrée variable entrainé hydrauliquement par cette derniére ce dispositif pouvant être monté sur la boite de vitesses notamment mécanique et relié à l'embrayage du véhicule,permet d'une part d'assurer à ces derniers à volonté soit un entrainement hydraulique continu avec une vitesse de marche relativement élevée,en faisant entrainer la boite de vitesses et le reste des éléments de transmission du véhicule par le moteur hydraulique à cylindrée variable par l'intermédiaire d'un embrayage secondaire et d'une transmission mécanique, soit un entrainement classique,et d'autre part de réaliser des économies de consommation de carburant,ainsi qu'une suralimentation normale dans les bas et moyens régimes,tout en utilisant des éléments standards.

On connait un dispositif d'entrainement d'une publication l'usine nouvelle numero 49 du 6 decembre 1984 page 13,permettant d'assurer aux véhicules une économie de carburant importante.

Il s'agit d'une transmission à friction à vitesse continument variable. Cette transmission utilisant une boite de friction est couplée dans certains cas,à un volant d'inertie,permettant de récuperer l'énérgie de freinage du véhicule.

La boite à friction comprend trois disques.Le premier est relié à un arbre d'entrée,le deuxiéme à un arbre de sortie,le troisiéme à double face est placé entre eux.Des organes de roulement pouvant pivoter relient les trois autres.

Leur angle d'inclinaison détermine le ratio de transmission.L'objectif de ce systéme est de faire tourner le moteur thermique qui entraine cette boite à friction,à une vitesse constante.

Cette solution présente l'inconvénient d'être déstinée avant tout, uniquement à des véhicules et engins spécialisés,remplissant des fonctions bien déterminées,tel que les bus circulant en zone urbaine et les camions de livraison.

Cette solution ne peut pas être généralisée aux véhicules particuliers et utilitaires à usage universel.

Le poids du volant d'inertie présente encore un inconvénient lorsque ce dernier est couplé à la transmission.

On connait encore par le brevet FR-A-2 381 218 montrant les caractéristiques du préambule de la revendication 1, un dispositif de transmission mixte pour véhicules comportant un ensemble à pompe et moteur hydraulique et une boite de transmission intermédiaire reliant le moteur thermique à la pompe hydraulique et le moteur hydraulique à la boite de vitesses.Cette boite de transmission intermédiaire relie également le moteur thermique à la boite de vitesses et comprend des moyens pour interrompre séléctivement la liaison entre la boite de vitesses et le moteur thermique ou le moteur hydraulique. Ce dispositif n'est prévu que pour des véhicules spécialisés tel que les véhicules chasse neige travaillant sous forte charge.

Il leur permet soit un entrainement classique,soit un entrainement hydraulique avec une vitesse trés lente de l'ordre de quelques centaines de métres à l'heure et sous forte charge.

Dans ce cas aussi,cette solution ne peut pas être généralisée pour l'entrainement des véhicules tous usages.

Avec ce dispositif on ne peut pas passer facilement de l'entrainement hydraulique à l'entrainement classique lorsque le véhicule est en marche.

L'invention a trois buts.

Le premier but de l'invention est de réaliser un dispositif d'entrainement fléxible pouvant faire partie de la chaine cinématique du véhicule particulier ou utilitaire,sans l'encombrer,comportant une transmission hydraulique intégrée d'une part,et d'autre part permettant d'assurer à ces derniers à volonté,soit un entrainement hydraulique continu avec une vitesse de marche élevée,soit un entrainement classique qui remplacera éventuellement le premier entrainement en cas de défectuosités au niveau de la transmission hydraulique.

Le deuxiéme but de l'invention est d'assurer aux véhicules en question une importante économie de consommation de carburant.

Le troisiéme but de l'invention est de prévoir en combinaison avec le but principal (le premier),un dispositif standard de suralimentation,accessoire,entrainé par le dispositif,permettant de suralimenter les moteurs thermiques notamment turbocompréssés des vehicules correctement dans les bas et moyens régimes,zones d'utilisation les plus fréquentes oû le turbocompresseur est inactif.

On atteint les deux premiers buts selon l'invention grâce au dispositif qui peut être monté sur la boite de vitesses du véhicule,et relié à son embrayage.

Suivant l'invention le dispositif d'entrainement fléxible à vitesse élevée tant en mode hydraulique qu'en mode mécanique comporte une transmission hydraulique intégrée composée d'une pompe hydraulique à cylindrée variable entrainée par le moteur thermique du véhicule particulier ou utilitaire et d'un moteur hydraulique principal à cylindrée variable entrainé hydrauliquement par cette derniére,ce dispositif comprenant un premier arbre d'entrée moteur relié au moteur thermique par un embrayage principal,un deuxiéme arbre d'entrée moteur,un arbre de sortie secondaire relié à la pompe hydraulique,un premier arbre de sortie,un deuxiéme arbre de sortie relié à l'entrée de la boite de vitesses,un premier arbre intermédiaire,un deuxiéme arbre intermédiaire,un arbre moteur secondaire relié au moteur hydraulique principal par un deuxiéme embrayage,ce dispositif permettant d'assurer au véhicule soit un entrainement hydraulique continu avec une vitesse de marche élevée en faisant entrainer la boite de vitesses et le reste des éléments de transmission du véhicule par le moteur hydraulique principal à cylindrée variable,soit un entrainement classique,est caractérisé en ce que les deux arbres d'entrée moteur,le premier et le deuxiéme arbre de sortie,et les deux arbres intermédiaires, sont montés dans le prolongement l'un de l'autre,en ce que la pompe hydraulique et le moteur hydraulique principal à cylindrée variable sont montés directement sur le dispositif tout en étant directement soutenus par une traverse fixée au chassis du véhicule,et en ce que le premier arbre de sortie et le deuxiéme arbre intermédiaire portent une poulie à l'une de leurs éxtrémités.

Grâce à ce dispositif,la boite de vitesses peut être entrainée à volonté soit par le moteur thermique par l'intermédiaire de l'embrayage du véhicule et d'une transmission mécanique reliant le premier arbre d'entrée moteur et le deuxiéme arbre de sortie du dispositif,soit par le moteur hydraulique principal à cylindrée variable par l'intermédiaire de l'embrayage secondaire accouplé au dispositif et d'une transmission mécanique reliant l'arbre moteur secondaire,le premier arbre intermédiaire le deuxiéme arbre intermédiaire,et le deuxiéme arbre de sortie du dispositif,et dans ce cas là,le moteur thermique tourne à une vitesse constante,de façon à obtenir une efficacité optimale,et entraine uniquement la pompe hydraulique à cylindrée variable qui entraine à son tour hydrauliquement le moteur hydraulique principal à cylindrée variable.
Pour placer le dispositif selon l'invention dans la chaine de transmission,il suffit de diminuer légérement la longeur du joint de cardant qui transmet le mouvement aux roues motrices d'une part,et de déplacer vers l'arriére,la boite de vitesses d'autre part.
La boite de vitesses est soutenue dans ce cas par la même traverse qui supporte partiellement la pompe hydraulique et le moteur hydraulique.Ces derniers se montent trés facilement et directement sur le dispositif.

Le troisiéme but est atteint grâce à l'emploi d'un dispositif de suralimentation accessoire à compresseur débrayable de façon automatique,ce dispositif est constitué de deux mécanismes identiques de commande assurant d'une part la mise en action automatique du compresseur qui suralimente le moteur thermique et ceci dés que ce dernier commence à tourner à un régime bas ou moyen,et comprenant d'autre part chacun un embravage,un arbre d'entrée relié à la sortie de mouvement de l'embrayage,un arbre de sortie relié au compresseur, un arbre moteur relié d'une part au dispositif par l'intermédiaire d'une transmission sans fin,et d'autre part à l'entrée de mouvement de l'embrayage.

Selon un mode de réalisation de l'invention l'arbre de sortie secondaire est monté perpendiculairement par rapport au premier arbre d'entrée moteur et au deuxiéme arbre d'entrée moteur,tandis que l'arbre moteur secondaire est monté perpendiculairement par rapport au premier arbre intermédiaire et au deuxiéme arbre intermédiaire.

Selon un mode de réalisation de l'invention les pignons coniques solidaires respectivement du deuxiéme arbre d'entrée moteur et du premier arbre intermédiaire possédent chacun une denture auxilliaire à taille droite et une surface conique pouvant coopérer avec les dentures à taille droite et les surfaces coniques des synchroniseurs montés réspectivement sur le premier arbre d'entrée moteur et le deuxiéme arbre intermédiaire.

L'invention concerne également un dispositif d'entrainement fléxible comprenant les caractéristiques du préambule de la revendication 1 et un troisiéme arbre d'entrée moteur supplémentaire d'une part,et d'autre part caractérisé en ce que le premier arbre d'entrée moteur,le deuxiéme arbre d'entrée moteur,l'arbre de sortie secondaire et la pompe hydraulique à cylindrée variable sont transférés de leur place dans le carter principal du dispositif à l'avant du moteur thermique tout en étant assemblés dans un même carter séparé et indépendant du carter principal,réalisé en une seule structure,auquel est accouplé d'une part un embrayage dont l'entrée et la sortie de mouvement sont respectivement liés au deuxiéme arbre d'entrée moteur et au villebrequin du moteur thermique du véhicule,et d'autre part la pompe hydraulique à cylindrée variable reliée à l'arbre de sortie secondaire, et en ce que le premier arbre d'entrée moteur,le deuxiéme arbre d'entrée moteur ainsi transférés sont remplacés dans le carter principal du dispositif par le troisiéme arbre d'entrée moteur portant un pignon engrénant en permanence avec le pignon solidaire du premier arbre de sortie.

Suivant un mode de réalisation de l'invention comme décrit dans le mode d'éxécution principal,le dispositif d'entrainement fléxible comporte un étage supplémentaire comprenant un troisiéme arbre intermédiaire monté libre en rotation dans le prolongement du deuxiéme arbre intermédiaire,un deuxiéme arbre moteur dirigé perpendiculairement par rapport au troisiéme arbre intermédiaire,un troisiéme embrayage accouplé au carter du dispositif et dont la sortie de mouvement est liée au deuxiéme arbre moteur,un deuxiéme moteur hydraulique à cylindrée variable de cylindrée inférieure à celle du moteur hydraulique principal relié à l'entrée de mouvement du troisiéme embravage et soutenu par une traverse fixée au chassis du véhicule.

Selon un mode de réalisation de l'invention en relation avec la caractéristique précédente,le deuxiéme moteur hydraulique à cylindrée variable peut être avantageusement remplacé par un moteur éléctrique pour entrainer un certain type de véhicules-,selon les éxigences du parcours routier ou urbain.

L'invention concerne également des procédés pour la commande de ce dispositif d'entrainement fléxible qui comprend les caractéristiques des revendications 7,8,respectivement.

Le dispositif selon l'invention présente plusieurs avantages.Il peut être accouplé aux organes de transmission classiques et de tout type de véhicules,quelque soit la nature du moteur thermique,et ceci de façon simple et non encombrante.

Il permet de faire entrainer la boite de vitesses de façon continue,à une vitesse relativement élevée,par l'intermédiaire d'un deuxiéme embrayage et d'une transmission mécanique reliant l'arbre moteur secondaire et le deuxiéme arbre de sortie,tout en donnant au moteur thermique qui entraine dans ce cas uniquement la pompe hydraulique à cylindrée variable,la possibilité de tourner à une vitesse pratiquement constante de manière à obtenir une éfficacité optimale,d'où une trés nette diminution de la consommation spécifique,surtout dans le cas des pentes,des routes sinueuses comportant plusieurs virages,et en circulation urbaine.

Le dispositif permet de passer de l'entrainement hydraulique à l'entrainement mécanique à volonté,sans arrêter le véhicule,d'où un entrainement du véhicule assuré même en cas de défectuosités au niveau de la transmission hydraulique.

Le dispositif présente en plus l'avantage de suralimenter les moteurs thermiques correctement dans les bas et moyens régimes,d'où un gain de puissance appréciable et une nette amélioration du rendement des moteurs.

Le dispositif selon l'invention présente enfin l'avantage de faire entrainer la boite de vitesses et les éléments de transmission d'un certain type de vehicules par un moteur éléctrique par l'intermédiaire d'un deuxiéme embrayage accouplé au dispositif,et d'une transmission mécanique reliant le deuxiéme arbre moteur secondaire et le deuxiéme arbre de sortie-,dans le cas où la troisiéme variante du dispositif est montée sur le vehicule,et ceci selon les éxigences du parcours routier ou urbain,d'où une économie de consommation de carburant trés importante,et une trés grande diminution des rejets de gaz toxiques-,poluants.

D'autres caracteristiques et avantages de la présente invention ressortiront de la description qui va suivre,des modes de réalisation donnés à titre d'exemple en référence aux dessins annexés sur lesquels:

– la figure (1) montre de façon schématique la disposition de la pompe hydraulique à cylindrée variable (5),de l'embrayage secondaire (6) et du moteur hydraulique à cylindrée variable (7) sur le dispositif;

– la figure (2) nous montre le schéma cinématique du vehicule comprenant le moteur thermique (1),l'embrayage (2) ,le dispositif (3),la boite de vitesses (4) ,le joint de cardan ($4_1$),et l'essieu ($4_2$);

– la figure (3) représente le dispositif (premiére variante) selon l'invention de façon schématique;

– la figure (4) représente la deuxiéme variante du dispositif selon l'invention;

– la figure (5) représente la troisiéme variante du dispositif selon l'invention;

– la figure (6) représente la quatriéme variante du dispositif selon l'invention,où seul le moteur hydraulique (20) du dispositif est remplacé par un moteur éléctrique (21);

– la figure (7) représente de façon schématique le dispositif de suralimentation ;

– la figure (8) représente les canalisations reliant le compresseur volumétrique au collecteur d'admission du moteur thermique (1) ;

Le dispositif selon l'invention peut être utilisé pour l'entrainement notamment des vehicules particuliers,de tourisme à traction avant, arriére,intégrale,ainsi que les vehicules utilitaires légers lourds, à deux,quatre,six,ou huit roues motrices ou plus.

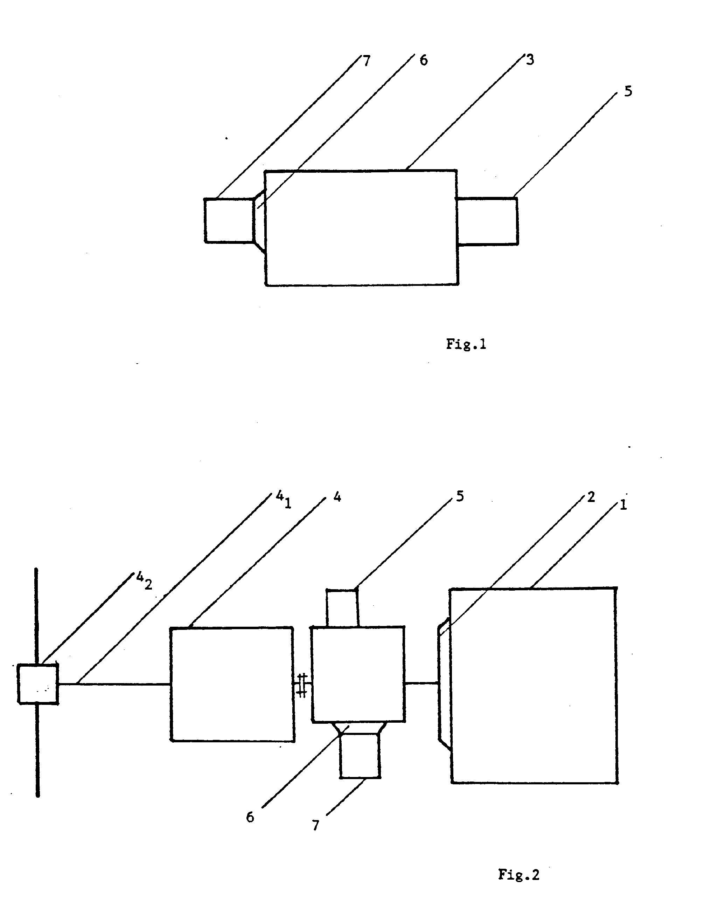

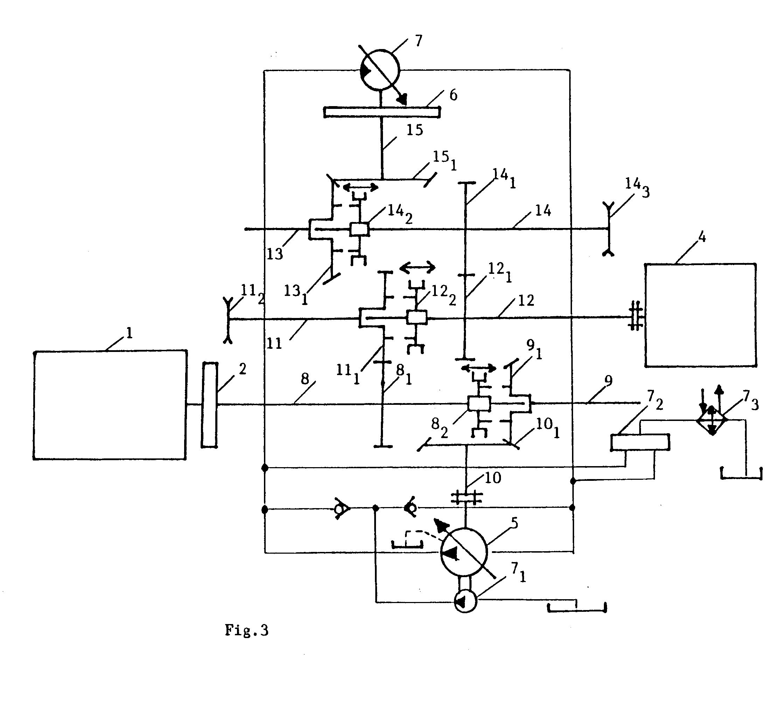

Tous les éléments constitutifs du dispositif (figure 3) sont représentés d'une façon schématique.

Sur le schéma (figure 3) la référence 3 désigne globalement le dispositif (premiére variante) selon l'invention.

La réfernece 12 désigne le deuxiéme arbre de sortie duquel est solidaire un pignon cylindrique $12_1$ à denture hélicoidale engrénant en permanence avec un pignon ($14_1$) à denture hélicoidale solidaire du deuxiéme arbre intermédiaire 14 monté libre en rotation dans le prolongement du premier arbre intermédiaire 13.

Les pignons $12_1$ et $14_1$ ont les mêmes dimensions .

La réference $13_1$ désigne un pignon conique solidaire de l'arbre 13, engrénant en permanence avec un autre pignon conique $15_1$ solidaire de l'arbre moteur secondaire 15.

Les pignons $13_1$ et $15_1$ ont les mêmes dimensions.

La réference 11 désigne le premier arbre de sortie duquel est solidaire un pignon cylindrique $11_1$ à denture hélicoidale.

La réference 8 désigne le premier arbre d'entrée (moteur) duquel est solidaire un pignon cylindrique $8_1$ à denture hélicoidale,engrenant en permanence avec le pignon $11_1$.

La réference 9 désigne le deuxiéme arbre d'entrée (moteur) duquel est solidaire un pignon conique $9_1$ engrénant en permanence avec le pignon conique $10_1$ solidaire à son tour de l'arbre de sortie secondaire 10 .Les pignons $9_1$ et $10_1$ ont les mêmes dimensions .

Les réferences $14_2,12_2,8_2$ désignent des synchroni-

seurs standards à verrouillage solidaires en rotation réspectivement des arbres 14 ,12 , et 8.Les pignons $8_1$ et $11_1$ ont les mêmes dimensions.

L'arbre 12 est monté libre en rotation dans le prolongement de l'arbre 11. Les réferences $17_3$ et $11_2$ désignent des poulies solidaires respectivement des arbres 17 et 11,et permettant d'entrainer par l'intermédiaire de transmissions sans fin le dispositif de suralimentation (non représenté sur la figure 3).

L'arbre 8 est monté libre en rotation dans le prolongement de l'arbre 9 .Les synchroniseurs $14_2,12_2,8_2$ permettent à volonté d'accoupler et de désacoupler respectivement les arbres 13 et 14,11 et 12,8 et 9.Les réferences $7_1,7_3$ désignent la pompe de gavage et le refroidisseur. Les pignons $13_1,11_1,9_1$ portent chacun des dentures à taille droite et des surfaces coniques (standards non représentées en détail) coopérant avec celles des synchroniseurs $14_2,12_2,8_2$(non représentées). La réference 6 désigne l'embrayage secondaire dont la sortie de mouvement est liée à l'arbre 15,et l'entrée de mouvement est liée au moteur hydraulique à cylindrée variable 7 soutenu à son tour par une traverse (non représentée) fixée au chassis du vehicule.

La réference 4 désigne la boite de vitesses dont l'arbre d'entrée est relié par l'intermédiaire d'un joint d'accouplement (non représenté) à l'arbre 12.

La réference 2 désigne l'embrayage principal du vehicule dont l'entrée de mouvement est reliée au moteur thermique 1 ,et la sortie de mouvement est reliée à l'arbre 8.

La réference 5 désigne la pompe hydraulique à cylindrée variable dont l'arbre de sortie est relié par l'intermédiaire d'un joint d'accouplement (non représenté) à l'arbre 10.La pompe hydraulique à cylindrée variable 5 est soutenue par la même traverse qui soutient le moteur hydraulique à cylindrée variable 7.

Chaque synchroniseur est actionné par une fourchette standard engagée dans sa gorge.Chaque fourchette est montée sur le coulisseau standard qui peut glisser longitudinalement dans le couvercle supérieur du dispositif.Chaque coulisseau posséde un dispositif de sécurité standard (bille) supplémentaire permettant de le verrouiller automatiquement quand il n'est pas maneuvré.Les fourchettes qui actionnent les synchroniseurs standards sont reliés mécaniquement à des verins pneumatiques de commande qui réalisent le déplacement longitudinal des coulisseaux dans les deux sens,automatiquement.

Les éléments standards (fourchettes,coulisseaux,dispositifs de sécurité,verins pneumatiques),ne sont pas représentés en détail,car ils sont connus.La réference $7_2$ désigne le distributeur.

Le dispositif de commande qui assure le déplacement automatique des verins pneumatiques sera décrit en détail plus loin.Le distributeur $7_2$ assure la circulation du fluide de la pompe 5 vers le moteur 7. Initialement,tous les synchroniseurs occupent une position de point mort.Quand on déplace uniquement le synchroniseur $12_2$,de la position de point mort à la position d'engrenage,comme l'indique la flèche (de la gauche vers la droite,sur la figure 3),on réalise l'accouplement de l'arbre 11 et de l'arbre 12 .Le dispositif est ainsi en liaison mécanique.Le mouvement entrant par l'arbre 8 est transmis à l'arbre 12 qui entraine la boite de vitesses 4.

Pour mettre le dispositif en liaison mécanique d'une part,et assurer d'autre part l'entrainement du vehicule,on réalise les opérations suivantes:

– Ouverture simultanée des embrayages (2) et (6),

– Déplacement automatique du synchroniseur ($12_2$) uniquement de la position de point mort à la position d'engrenage,les deux autres synchroniseurs ($14_2$ et $8_2$) étant en position de point mort,

– Fermeture simultanée des embrayages (2) et (6),

– Ouverture simultanée des embrayages (2),et (6),

– Choix du rapport de transmission proprement dit au niveau de la boite de vitesses (4),

de manière à pouvoir entrainer directement la boite de vitesses par le moteur thermique (1),par l'intermédiaire de l'embrayage (2) et de la transmission mécanique reliant l'arbre (8) et l'arbre (12).

Quand on déplace d'une part,les synchroniseurs ($14_2$) et ($8_2$) de la position de point mort à la position d'engrenage comme l'indique les flèches (figure 3),et d'autre part le synchroniseur ($12_2$) de la position d'engrenage à la position de point mort comme l'indique la flèche (figure 3),on réalise alors en même temps,l'accouplement des arbres (13) et (14),et le désacouplement des arbres (11) et (12).

Le mouvement entrant par l'arbre (8) est transmis à l'arbre (10) qui entraine la pompe hydraulique à cylindrée variable (5).Cette derniére entraine hydrauliquement le moteur hydraulique à cylindrée variable (7),qui entraine à son tour la boite de vitesses (4) et le reste des éléments de transmission du vehicule par l'intermédiaire de l'embrayage (6) et d'une transmission mécanique reliant l'arbre (15) et l'arbre (12).

Pour passer de la liaison mécanique au niveau du dispositif,à la liaison hydraulique d'une part,et assurer d'autre part l'entrainement du vehicule,on réalise les operations suivantes:

– Ouverture des embrayages (2) et (6),

– Déplacement automatique de la position de point mort à la position d'engrenage des synchroniseurs ($8_2$) et ($14_2$),et en même temps déplacement automatique de la position d'engrenage à la position de point mort du synchroniseur ($12_2$),

– Fermeture simultanée des embrayages (2) et (6),

– Ouverture simultanée des embrayages (2) et (6),

– Choix du rapport de transmission proprement dit,

– Fermeture simultanée des embrayages (2) et (6),

de maniére à pouvoir entrainer la boite de vitesses (4) par le moteur hydraulique à cylindrée variable (7) par l'intermédiaire de l'embrayage (6) et d'une transmission mécanique reliant l'arbre (15) et l'arbre (12),tout en donnant au moteur thermique (1) du vehicule suralimenté jusqu'à la limite déstructrice,et qui entraine dans ce cas uniquement la pompe hydraulique (5) par l'intermédiaire de l'embrayage (2) et d'une transmission mécanique reliant l'arbre d'entrée (8) et l'arbre de sortie secondaire (10),la possibilité de tourner à une vitesse constante (régime moyen), de façon à obtenir une efficacité optimale et satisfaire les besoins de la transmission hydraulique (débit suffisant à des pressions élevées).

Le changement de rapport de transmission au cours du fonctionnement se fait suivant le principe de fonctionnement suivant:

pour assurer un changement de rapport de transmission quelconque,on réalise les operations suivantes:

– Ouverture simultanée des embrayages (2) et (6),

– Changement du rapport de transmission proprement dit,

– Fermeture simultanée des embrayages (2) et (6),

de maniére à effectuer le changement de rapport de transmission à volonté sans risque de cassure des dentures,que le dispositif soit en liaison mécanique ou hydraulique.

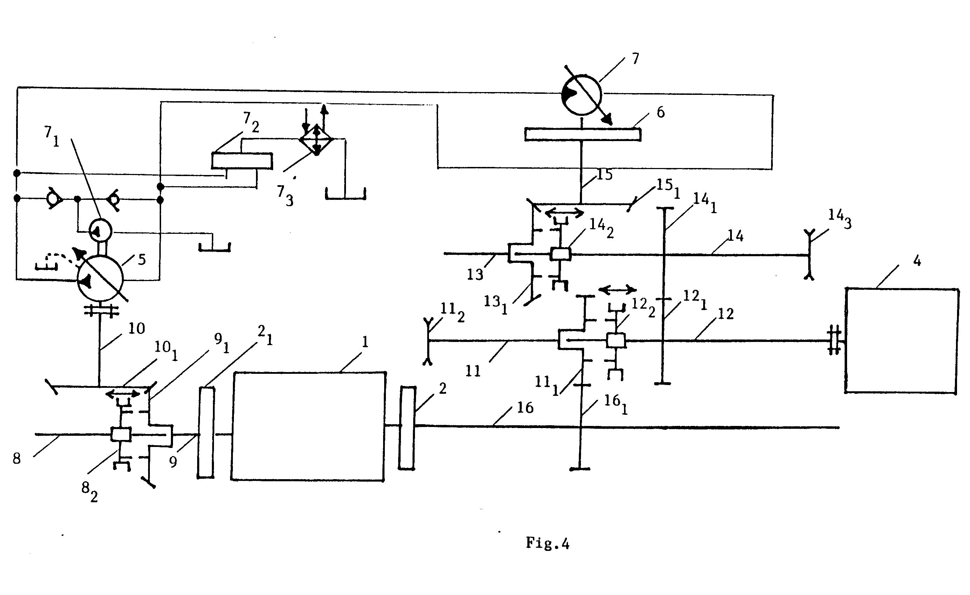

Tous les éléments constitutifs de la deuxiéme variante du dispositif (figure 4) sont représentés d'une façon schématique.

L'étage inferieur du dispositif (premiere variante figure 3) comprend l'arbre (8) duquel est solidaire en rotation le synchroniseur $(8_2)$, l'arbre (9),l'arbre (10),et la pompe hydraulique (5).

Cet étage est remplacé dans la deuxiéme variante (figure 4) par un arbre (16) duquel est solidaire un pignon cylindrique à taille hélicoidale $(16_1)$ engrénant en permanence avec le pignon $(11_1)$.

Les pignons $(16_1)$ et $(11_1)$ ont les mêmes dimensions .

Les éléments précités constituant l'étage inferieur décrit ci-dessus sont transferés à l'avant du moteur (figure 4) et réunis dans un même carter,réalisé en une seule structure simple et compacte,auquel est accouplé un embrayage (2),dont l'entrée de mouvement est liée au villebrequin du moteur thermique (1) et la sortie de mouvement est liée à l'arbre (9).

Pour mettre le dispositif (deuxiéme variante figure 4) en liaison mécanique ou hydraulique,comme dans le cas précédent (première variante figure 3), d'une part, et assurer par la suite l'entrainement du vehicule,d'autre part,on réalise d'une maniéré génerale,les mêmes operations que dans le cas de la premiére variante (figure 3).

Le procédé de commande lors d'un changement de rapport de transmission, est identique à celui de la première variante (figure 3).

Seules deux operations (embrayage et débrayage),different légerement par rapport à celles de la première variante (figure 3).

Au cours des operations d'embrayage ou de débrayage,les trois embrayages $(2),(2_1),$et (6) sont fermés ou ouverts simultanément.

Quand la liaison mécanique est établie,le mouvement entrant par l'arbre (16) est transmis à l'arbre (12) qui entraine la boite de vitesses (4).

Quand la liaison mécanique est déconnectée et la liaison hydraulique est établie le mouvement entrant par l'arbre (9) est transmis à l'arbre (10) qui entraine la pompe hydraulique (5).Cette derniére entraine hydrauliquement le moteur hydraulique (7),qui à son tour entraine la boite de vitesses (4) par l'intermédiaire de l'embrayage (6) et d'une transmission mécanique reliant l'arbre (15) et l'arbre (12).

La figure (5) nous montre l'ensemble des éléments constitutifs précités du dispositif initial (figure 3),réunis et assemblés avec un étage supplémentaire,dans un même carter réalisé en une structure simple et compacte (non représentée en détail).

Cet étage comprend un arbre moteur (18),un arbre intermédiaire (17) duquel est solidaire un un pignon conique $(17_1)$ engrenant en permanence avec un pignon conique (18 ),solidaire de l'arbre (18).

L'arbre (17) porte d'une part,une poulie $(17_3)$,et d'autre part,une partie cannelée (non représentée) pouvant recevoir un synchroniseur coulissant $(17_2)$.L'arbre (17) est monté libre en rotation dans le prolongement de l'arbre (14).L'arbre (18) est dirigé perpendiculairement par rapport à l'arbre (17).Les pignons $(17_1)$ et $(18_1)$ ont les mêmes dimensions.Le pignon $(13_1)$ porte des dentures à taille droite et des surfaces coniques standards (non représentées) cooperant avec celles du synchroniseur $(14_2)$ (non représentées en détail).Ce dernier permet à volonté d'accoupler ou de désacoupler les arbres (14) et (17).Cet étage comprend en plus d'une part un embrayage (19) accouplé au dispositif et dont la sortie de mouvement est liée à l'arbre (18) et d'autre part un moteur hydraulique à cylindrée variable (20) de cylindrée inferieure à celle du moteur hydraulique (7),relié à l'entrée de mouvement de l'embrayage (19),et soutenu par une traverse (non représentée) fixée au chassis du vehicule.Le synchroniseur $(17_2)$ est actionné par une fourchette standard engagée dans sa gorge .Son dipositif de commande est identique à ceux des synchroniseurs $(14_2),(12_2),(8_2)$.

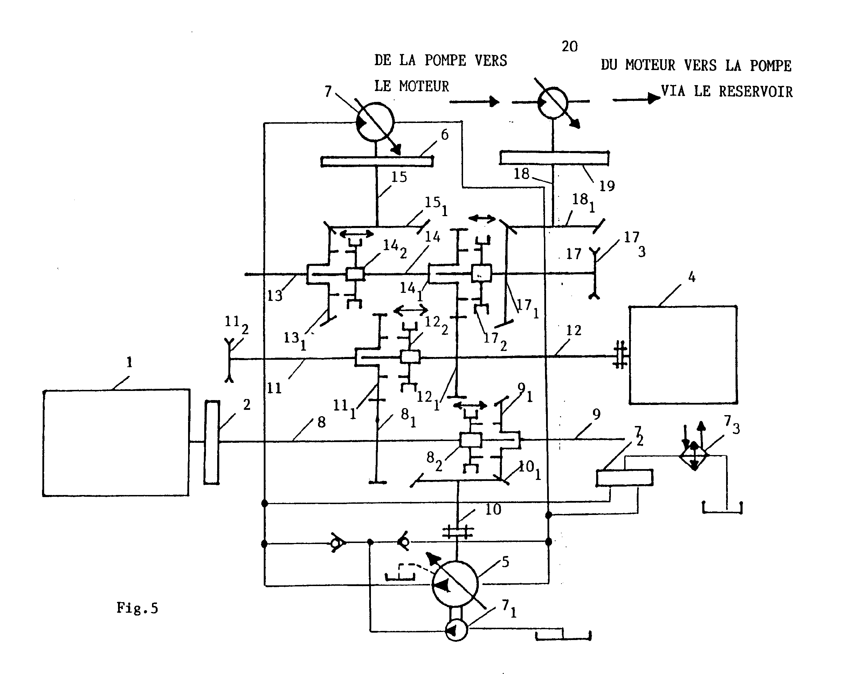

En déplaçant uniquement le synchroniseur $(12_2)$ de la position de point mort à la position d'engrenage comme l'indique la flèche (de la droite vers la gauche,sur la figure 5),on réalise l'accouplement de l'arbre (11) et de l'arbre (12). Les synchroniseurs $(14_2),(17_2),(8_2)$ étant en position de point mort.Le dispositif est ainsi en liaison mécanique.Le mouvement entrant par l'arbre (8) est transmis à l'arbre (12) qui entraine la boite de vitesses (4).

Pour mettre,le dispositif (quatriéme variante figure 5) en liaison mécanique d'une part et assurer d'autre part l'entrainement du vehicule,on réalise les operations suivantes:

– Ouverture simultanée des embrayages (2),(6),(19),

– Déplacement automatique uniquement du synchroiniseur (12$_2$) de la position de point mort,à la position d'engrenage,les trois autres synchroniseurs (14$_2$),(17$_2$),(8$_2$) étant en position de point mort,

– Fermeture simultanée des embrayages (2),(6),(19),

– Ouverture simultanée des embrayages (2),(6),(19),

– Choix du rapport de transmission proprement dit au niveau de la boite de vitesses (4),

– Fermeture simultanée des embrayages (2),(6),(19).

Cette façon de procéder permet de faire entrainer directement la boite de vitesses (4) par le moteur thermique (1) par l'intermédiaire de l'embrayage (2),et de la transmission mécanique reliant l'arbre (8) et l'arbre (12).

En déplaçant d'une part les synchroniseurs (14$_2$) et (8$_2$) de la position de point mort à la position d'engrenage comme l'indiquent les flèches sur la figure 5 (de la droite vers la gauche pour le synchroniseur 14$_2$,et de la gauche vers la droite pour le synchroniseur 8$_2$,et d'autre part le synchroniseur 12$_2$ de la position d'engrenage à la position de point mort comme l'indique la flèche sur la figure 5 (de la gauche vers la droite),on réalise alors l'accouplement des arbres (13) et (14),(8) et (9).Le synchroniseur (17$_2$) conserve une position de point mort.Ainsi la liaison hydraulique primaire est établie au niveau du dispositif .Le mouvement entrant par l'arbre (8) est transmis à l'arbre (10) qui entraine la pompe hydraulique (5).Cette derniére entraine hydrauliquement le moteur hydraulique (7).Ce dernier entraine à son tour la boite de vitesses (4) par l'intermédiaire de l'embrayage (6) et de la transmission mécanique reliant l'arbre (15) et l'arbre (12).

Pour passer de la liaison mécanique à la liaison hydraulique primaire d'une part et assurer d'autre part l'entrainement du vehicule,on réalise les mêmes opérations que dans le cas de la premiére et la deuxiéme variante (figure 3 et 4).

Pour passer de la liaison hydraulique primaire au niveau du dipositif à la liaison hydraulique secondaire d'une part et assurer d'autre part l'entrainement du vehicule,on réalise les operations suivantes:

– Ouverture simultanée des embrayages (2),(6),(19),

– Déplacement automatique d'une part du synchroniseur (14$_2$)de la posid'engrenage à la position de point mort (de la gauche vers la droite comme l'indique la flêche sur la figure 5),et d'autre part du synchroseur (17$_2$)de la position de point mort à la position d'engrenage (de la droite vers la gauche comme l'indique la flêche sur la figure 5), les deux autres (8$_2$) et (12$_2$) conservent les mêmes positions que dans le cas de la liaison hydraulique primaire,

– Orientation manuelle à l'aide d'un distributeur (non représenté) assurant la circulation du fluide de la pompe 5 vers le moteur hydraulique 20,

– Fermeture simultanée des embrayages (2),(6),(19),

– Ouverture simultanée des embrayages (2),(6),(19),

– Choix du rapport de transmission proprement dit,

– Fermeture simultanée des embrayages (2),(6),(19).

Cette façon de procéder permet de faire entrainer la boite de vitesses (4) par le moteur hydraulique (20) par l'intermédiaire de l'embrayage (19) et de la transmission mécanique reliant l'arbre (18) et l'arbre (12) d'une part,et d'autre part assurer au vehicule un entrainement avec une vitesse plus élevée d'autre part.

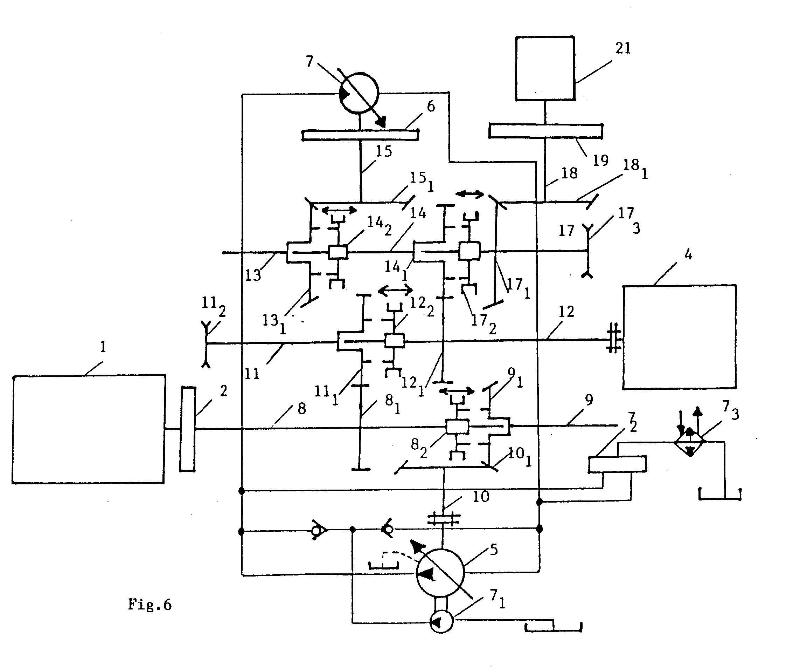

Les canalisations reliant la pompe 5 et le moteur hydraulique 20 (figure 5) ne sont pas représentés pour ne pas encombrer le schéma.Dans toutes les variantes (figures 3,4,5,6) les organes de contrôle,régulation et autres nécessaires dans l'installation hydraulique ne sont pas représentés à leur tour pour ne pas encombrer encore plus les schémas. La figure 6 nous montre le schéma de la quatriéme variante du dispositif où seul le moteur hydraulique (20) a été remplacé par un moteur éléctrique (21).Des batteries d'accumulateurs sont installées sur le véhicule d'une façon non encombrante pour allimenter le moteur éléctrique 21.Ce dispositif (figure 6) peut être utilisé pour l'entrainement d'un certain type de vehicules.

En fonction des exigences du parcours urbain ou routier la boite de vitesses peut être entrainée soit d'une façon classique,soit par le moteur hydraulique 7 par l'intermédiaire de l'embrayage 6 et d'une transmission mécanique reliant l'arbre 18 et l'arbre 12.

L'établissement de la liaison mécanique ou hydraulique primaire au niveau du dispositif (figure 6) se font de la même maniéré que dans les cas précédents (premiére variante figure 3,deuxiéme variante figure 4,et quatriéme variante figure 5).

Une commande pneumatique à séquenceurs modulaires est prévue pour chaque variante du dispositif selon l'invention,afin de programmer et contrôler l'action des verins (non représentés) automatisant ainsi les déplacements des synchroniseurs standards à verrouillage. A chaque verin sont associés d'une part un distributeur pneumatique (non représenté) distribuant ainsi à ce dernier l'air comprimé provenant du circuit pneumatique du vehicule,et d'autre part deux capteurs de fin de course .

Les fourchettes qui actionnent les synchroniseurs standards $(8_2,12_2, 14_2)$,dans le cas de la premiére et deuxiéme variante,et $(8_2,12_2,14_2,17_2)$ dans le cas de la troisiéme et quatriéme variante,sont reliés mécaniquement à des verins pneumatiques de commande (A,B,C,D,dans le cas de troisiéme et quatriéme variante).

Les réferences A+,B+,C+,D+,dénomment les mouvements de sortie des tiges des verins A,B,C,D,permettant les déplacements des synchroniseurs $(8_2),(12_2),(14_2),(17_2)$, de la position de point mort à la position d'engrenage.

Les réferences A-,B-,C-,D-,dénomment les mouvements d'entrée des tiges des verins A,B,C,D,permettant les déplacements des synchroniseurs $(8_2),(12_2),(14_2),(17_2)$,de la position d'engrenage à la position de point mort.

Le dispositif (premiére et deuxiéme variante figure 3 et 4) peut être selon l'invention soit en liaison mécanique soit en liaison hydraulique.

Dans la troisiéme variante (figure 5) le dispositif peut être soit en liaison mécanique,soit en liaison hydraulique primaire,soit en liaison hydraulique secondaire. Dans le cas de la quatriéme variante (figure 6), où seul le moteur hydraulique (20) est remplacé par un moteur éléctrique (21),le dispositif selon l'invention peut être,soit en liaison mécanique,soit en liaison hydraulique primaire,soit en liaison avec le moteur éléctrique (21).

Dans toutes les variantes du dispositif selon l'invention,chaque liaison (mécanique,hydraulique primaire ou secondaire),constitue un cycle pour la commande pneumatique à séquenceurs.

Lors de la réalisation de la liaison mécanique (premiér cycle) au niveau du dispositif (premiére et deuxiéme variante,figure 3 et 4), trois mouvements (A-,B+,C-), peuvent se derouler,dont deux (A-,B+) simultanément.Les mouvements (A-,et B+) sont contenus dans la même phase.

Lors de la réalisation de la liaison hydraulique (deuxiéme cycle) au niveau du dispositif (premiére et deuxiéme variante,figure 3 et 4), trois mouvements (A+,B-,C+),peuvent se derouler,dont deux (A+,B-) simultanément.Les mouvements (A+,B-) sont contenus dans la même phase.

A chaque phase correspond un module de phase du séquenceur.

Deux séquenceurs indépendants à deux modules chacun sont constitués pour résoudre ces cycles.

La sortie du premier module de phase de chaque séquenceur peut commander deux mouvements à la fois (A-,B+) lors du premier cycle,et (A+,B-) lors du deuxiéme cycle.

La sortie du deuxiéme module de phase de chaque séquenceur peut commander un seul mouvement à la fois (C-) dans le cas du premier cycle et (C+) dans le cas du deuxiéme cycle.Une cellule logique ET additionnelle est associée au premier module de chaque séquenceur .

Lors de la réalisation de la liaison mécanique (premier cycle)au niveau du dispositif (troisiéme et quatriéme variante figure 5 et 6) quatre mouvements (A-,B+,C-,D-) peuvent se derouler dont trois(A-,B+, C-) simultanement.

Les mouvements (A-,B+,C-) sont contenus dans la même phase .

Lors de la réalisation de la liaison hydraulique primaire (deuxiéme cycle ) au niveau du dispositif (troisiéme et quatriéme variante,figure 5 et 6),quatre mouvements (A+,B-,C+,D-) peuvent se derouler,dont trois (A+,B-,C+) simultanement.Ces derniers sont contenus dans la même phase .

Lors de la réalisation de la liaison hydraulique secondaire (troisiéme cycle) au niveau du dispositif (troisiéme et quatriéme variante,figure 5 et 6),quatre mouvements (A+,B-,C-,D+) peuvent se derouler ,dont trois (A+,B-,C-) simultanement .

Les mouvements (A+,B-,C-) sont contenus dans la même phase .

Pour pouvoir entrainer la boite de vitesses par le moteur éléctrique par l'intermédiaire de l'embrayage (19) et de la transmission mécanique reliant l'arbre (18) et l'arbre (12),on réalise au niveau du dispositif (quatriéme variante figure 6),quatres mouvements (A-,B-,C-,D+) dont trois (A-,B-,C-),simultanement .

A chaque phase correspond un module de phase du séquenceur .

Dans ces cas,deux cellules logiques ET additionnelles sont associées au premier module de chaque séquenceur.

Les liaisons mécanique,hydraulique primaire,et secondaire,constituent trois cycles indépendants pour la commande pneumatique à séquenceurs du dispositif (troisiéme variante figure 5).

Trois séquenceurs indépendants à deux modules chacun sont constitués pour résoudre les cycles cités ci-dessus .

Trois autres séquenceurs à deux modules chacun sont aussi constitués pour résoudre les cycles de la quatriéme variante du dispositif (figure 6).

La sortie du premier module de phase de chaque séquenceur peut commander trois mouvements simultanement lors de chaque cycle.La sortie du deuxiéme module de phase de chaque séquenceur peut commander un seul mouvement lors de chaque cycle.

Le circuit pneumatique agissant sur les distributeurs pneumatiques comprend en plus quatre cellules logiques OU additionnelles .

Ces derniers sont prévues pour isoler les sorties de modules de phase d'une part,et d'autre part éviter les intercommunications inoportunes entre les differentes phases commandant le même mouvement.Les circuits logiques,les distributeurs pneumatiques,les cellules logiques ET,OU, les capteurs de fin de course,et les séquenceurs ne sont pas représentés,car connus.

Pour toutes les variantes du dispositif selon l'invention,le premier module de chaque séquenceur délivre l'ordre des mouvements prévus à la phase,et reçoit les signaux en retour de fin d'éxecution des dits mouvements.

Le premier module en question,reçoit les signaux en retour de tous les mouvements commandés par la phase.Ces signaux de retour,provenant des capteurs de fin de course (non représentés) déclenchent la phase suivante dans le cycle,c'est à dire le module de phase voisin.

Le deroulement de tout cycle séquentiel est visualisé.A tout moment, un voyant (non représenté) du séquenceur s'allume,pour indiquer la la phase active.Les séquenceurs (non représentés) sont montés sur le tableau de bord du vehicule.

Pour réaliser n'importe quelle liaison au niveau de n'importe quelle variante du dispositif selon l'invention,le conducteur doit d'abord débrayer,ensuite actionner manuellemently le premier module du premier, deuxiéme,ou troisiéme séquenceur (selon la liaison choisie au niveau du dispositif),et enfin débrayer.

La réalisation pratique des liaisons des differentes variantes du dispositif peut être réalisée en technologie éléctrique,dans le cas des vehicules utilitaires légers dépourvus de circuits pneumatiques.Dans ce cas les cycles sont réalisés à l'aide de séquenceurs éléctriques standards.A cet effet une mini centrale hydraulique standard autonome comprenant une pompe hydraulique commandée par un moteur éléctrique de cinq cent watts est prévu.

Les verins pneumatiques de commande des fourchettes de tous les synchroniseurs,peuvent être remplacés par des verins hydrauliques.Les distributeurs pneumatiques peuvent être remplacés par des électrovannes et des distributeurs hydrauliques.

Tous les éléments constitutifs du dispositif de suralimentation sont représentés de façon schématique sur la figure (7).

Le dispositif de suralimentation comprend d'une part un compresseur volumétrique (26),deux mécanismes identiques disposés de part et d'autre de ce dernier et permettant la mise en action et l'arrêt automatique de ce dernier.

Chaque mécanisme comprend un arbre d'entrée (24 pour le premier mécanisme et 28 pour le deuxiéme),un arbre de sortie (25 pour le premier mécanisme, et 27 pour le deuxiéme), un embrayage (23 pour le premier mécanisme,et 29 pour le deuxiéme).

Le dispositif de suralimentation comprend en plus deux arbres d'entrée moteurs (22 et 30).Les sorties et les entrées de mouvement des embrayages (23 et 29) sont liées respectivement aux arbres (25 et 27) d'une part et (22 et 30) d'autre part.

Les arbres (24 et 28) portent chacun une extrémité (24 pour le premier et 28 pour le deuxième),dotée d'une denture à taille droite et d'une surface conique (non reptésentée) pouvant cooperer avec celles des synchroniseurs correspondants (25 d'une part et 27 d'autre part).

Les réferences $22_1$ et $30_1$ désignent des poulies solidaires respectivement des arbres 22 et 30.

Les réferences $25_1$ et $27_1$ désignent les synchroniseurs standards à verrouillage solidaires en rotation respectivement des arbres 25 et 27.

Les arbres 25 et 27 sont montés libres en rotation dans le prolongement des arbres 24 et 28.

Chaque levier de débrayage des embrayages 23 et 29 est relié mécaniquement à un verin pneumatique de commande (non représenté).

Les fourchettes standards (non représentées) engagés dans les gorges des synchroniseurs ($25_1$ et $27_1$) sont reliés à des verins pneumatiques (non représentés) de commande.Les poulies $22_1$et $11_2$ont les mêmes dimensions.Les poulies $30_1$ et $17_3$ ont des dimensions differentes.Le diamétre de la poulie $30_1$ est supérieur à celui de la poulie $17_3$.Ceci permet la transmission d'un couple plus élevé au compresseur 26,qui pourra à son tour comprimer et refouler l'air à une pression plus élevée.Un capteur de vitesse (non représenté) standard est monté sur le villebrequin du moteur thermique.La vitesse de rotation pour laquelle le turbocompresseur devient capable de créer une réelle surpression dans les cylindres est déterminée à l'avance.

Il est prévu une commande éléctronique standard (non représentée,car connue) permettant d'une part de programmer et contrôler de façon automatique uniquement l'action des verins pneumatiques automatisant le déplacement du levier de débrayage de l'embrayage 23 ,et celui du coulisseau duquel est solidaire une fourchette standard (non représentée), assurant le déplacement du synchroniseur $25_1$ de la position de point mort à la position d'engrenage et inversement,et même temps le désacouplement automatique des arbres 27 et 28 d'autre part.

Cette commande éléctronique permet en plus de programmer et de contrôler de façon semi- automatique l'action des verins pneumatiques automatisant le déplacement du levier de débrayage de l'embrayage 29, et du coulisseau duquel est solidaire une fourchette standard (non représentée)assurant le déplacement du synchroniseur $27_1$ de la position de point mort à la position d'engrenage et inversement.

Cette commande permet en plus de cela et en même temps de désacoupler les arbres 24 et 25 de façon automatique.

Dés que la vitesse de rotation du moteur thermique atteint une valeur inferieure à celle pour laquelle le turbocompresseur devient capable de créer une bonne surpression dans les cylindres le capteur agit en envoyant un signal éléctrique à la commande éléctronique.Cette derniére réagit à son tour en programmant et en contrôlant l'action des verins.Ces derniers réalisent les operations suivantes:

– Ouverture simultanée des embrayages 23 et 29,

– Déplacement automatique d'une part du synchroniseur $25_1$ de la position de point mort à la position d'engrenage,et d'autre part du synchroniseur $27_1$ de la position d'engrenage à la position de point,

– Fermeture simultanée des embrayages 23 et 29.

Cette façon de procéder permet de faire entrainer le compresseur (26) par le moteur thermique par l'intermédiaire de l'embrayage 2 ,et d'une transmission mécanique reliant l'arbre (8) et l'arbre (11),et d'une transmission sans fin par la suite reliant l'arbre (11) et l'arbre (22).

Le premier mécanisme actionne le compresseur durant la phase de fonctionnement normal.

Dans certaines conditions de fonctionnement qui nécessitent un couple trés important,le premier mécanisme est débrayé de façon automatique. Le deuxiéme mécanisme est actionné tout de suite aprés de façon semi-automatique.Il entraine ainsi le compresseur qui assure la suralimentation du moteur thermique.La pression de suralimentation étant dans ce cas plus importante.Ce qui permet d'augmenter beaucoup plus le couple du moteur thermique qui tourne à un régime constant.

Le compresseur peut suralimenter le moteur thermique avec une pression plus élevée lorsqu'il est entrainé par le deuxiéme mécanisme précité.

Pour satisfaire cette condition le conducteur doit d'abord établir la liaison hydraulique au niveau du dispositif,ensuite agir sur la commande éléctronique.Cette derniére réagit à son tour en programmant et en contrôlant l'action des verins pneumatiques de commande.

Ces derniers réalisent les operations suivantes:

– Ouverture simultanée des embrayages 23,et29,

– Déplacement automatique d'une part du synchroniseur $25_1$ de la position d'engrenage à la position de point mort,et d'autre part du synchroniseur $27_1$ de la position de point mort à la position d'engrenage,

– Fermeture simultanée des embrayages 23 et 29.

Cette façon de procéder permet de faire entrainer le compresseur (26) par le moteur hydraulique (26) (figure 3 et 4) par l'intermédiaire de l'embrayage (6),d'une transmission mécanique reliant les arbres (15) et (17),et enfin d'une transmission sans fin reliant les arbres (17) et (30).

Un détecteur de cliquetis et un systéme de gestion électronique de la pression de suralimentation (standards),peuvent être avantageusement montés sur le moteur thermique du vehicule.

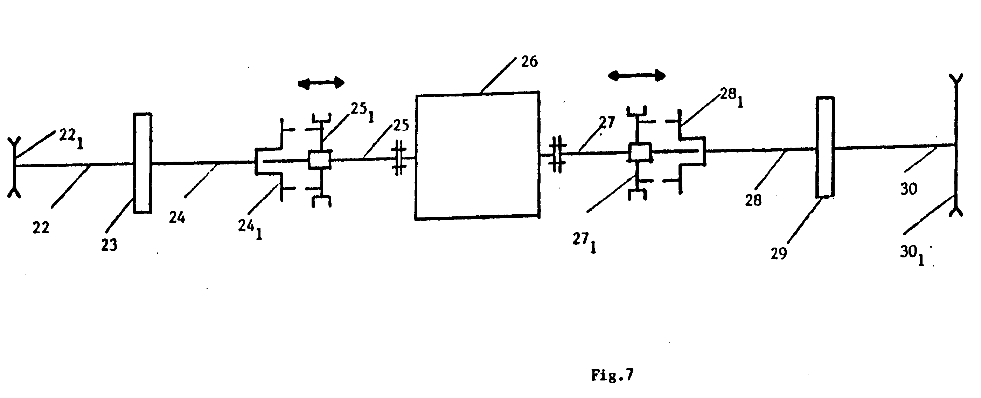

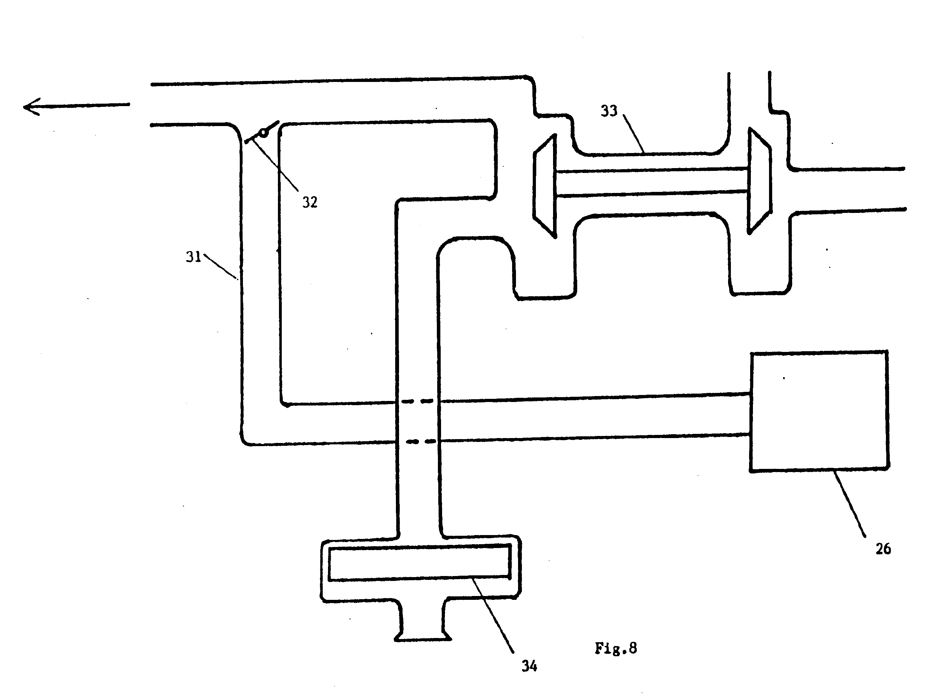

Les arbres 24 et 25,27 et 28, les synchroniseurs $25_1$ et $27_1$,et les embrayages 23 et 29, (figure 7), peuvent être remplacés par des embrayages éléctromagnétiques assurant la mise en action et l'arrêt automatique du compresseur 26 (figure 7), dans les mêmes conditions que précédemment .

Les entrées de mouvement de ces embrayages seront respectivement liées aux arbres 22 et 30,tandis que leurs sorties de mouvement seront liées aux éxtrémités de l'arbre moteur du compresseur.

La figure 8 nous montre la canalisation reliant la sortie de l'air comprimé du compresseur et le collecteur d'admission du moteur thermique (non représenté en détail).

La référence 31 désigne un conduit comportant un volet automatique 32 actionné par un actionneur éléctrique (standard,non représenté). Ce dernier assure l'ouverture et la fermeture automatique du conduit. Les références 33 et 34 désignent respectivement le turbocompresseur et le filtre à air.

La commande d'embrayage du véhicule différe légérement selon les variantes du dispositif.Le réservoir du liquide en charge et le cylindre de débrayage (non représentés) du véhicule peuventêtre surdimentionnés de maniéré à alimenter en même temps,correctement,et à tout moment,soit deux cylindres récepteurs des embrayages 2 et 6 dans le cas de la premiére variante du dispositif (figure 3),soit trois cylindres récepteurs des embrayages 2,2 ,6,ou 2,6,19 dans le cas de la deuxiéme,troisiéme ou quatriéme variante du dispositif (figure 4,5,6) et ceci quand on actionne la pédale d'embrayage du véhicule.

Chaque cylindre récepteur actionne à son tour le levier de débrayage de son propre embrayage.Chaque cylindre récepteur est relié au maitre cylindre principal de débrayage par l'intermédiaire d'une canalisation indépendante.Il est prévu un manipulateur de télécommande éléctronique standard permettant de faire varier à volonté la cylindrée du moteur et de la pompe hydraulique d'une part et les paramétres d'autre part.

Ce manipulateur remplacera l'accélérateur lorsque la liaison hydraulique est établie au niveau du dispositif.

Le dispositif décrit trouve de nombreuses applications.Un certain nombre d'entre elles seront énumérés ci-aprés à titre d'exemple :

a) machines agricoles,

b) engins de travaux publiques,

c) chalutiers,remorqueurs,et dérivés,

d) véhicules utilitaires légers et lourds,

e) véhicules particuliers et de tourisme.

## Revendications

1. Dispositif d'entrainement fléxible à vitesse élevée tant en mode hydraulique qu'en mode mécanique comportant une transmission hydraulique intégrée composée d'une pompe hydraulique (5) à cylindrée variable entrainée par le moteur thermique (1) du véhicule particulier ou utilitaire et d'un moteur hydraulique principal (7) à cylindrée variable entrainé hydrauliquement par cette derniére,ce dispositif comprenant un premier arbre d'entrée moteur (8) relié au moteur thermique (1) par un embrayage principal (2),un deuxiéme arbre d'entrée moteur (9),un arbre de sortie secondaire (10) relié à la pompe hydraulique (5),un premier arbre de sortie (11),un deuxiéme arbre de sortie (12) relié à l'entrée de la boite vitesses (4),un premier arbre intermédiaire (13),un deuxiéme arbre intermédiaire (14),un arbre moteur secondaire (15) relié au moteur hydraulique principal (7) par un deuxiéme embrayage (6),ce dispositif permettant d'assurer au véhicule soit un entrainement hydraulique continu avec une vitesse de marche élevée en faisant entrainer la boite de vitesses et le reste des éléments de transmission du véhicule par le moteur hydraulique principal à cylindrée variable,soit un entrainement classique,est caractérisé en ce que les deux arbres d'entrée moteurs (8,9),les deux arbres de sortie (11,12),et les deux arbres intermédiaires (13,14) sont montés dans le prolongement l'un de l'autre,et en ce que la pompe hydraulique (5) et le moteur hydraulique principal (7) sont montés directement sur le dispositif tout en étant directement soutenus par une traverse fixée au chassis du véhicule,et en ce que le premier arbre de sortie (11) et le deuxiéme arbre intermédiaire (14) portent une poulie à l'une de leurs extrémités.

2. Dispositif selon la revendication 1 caractérisé en ce que l'arbre de sortie secondaire (10) est monté perpendiculairement par rapport au premier arbre d'entrée moteur (8) et au deuxiéme arbre d'entrée moteur (9),tandis que l'arbre moteur secondaire (15) est monté perpendiculairement par rapport au premier arbre intermédiaire (13) et au deuxiéme arbre intermédiaire (14).

3. Dispositif selon les revendications 1 et 2 caractérisé en ce que les pignons coniques ($9_1$) et ($13_1$) solidaires respectivement du deuxiéme arbre d'entrée moteur (9) et du premier arbre intermédiaire (13) possédent chacun une denture auxilliaire à taille droite et une surface conique pouvant coopérer avec les dentures à taille droite et les surfaces coniques des synchroniseurs ($8_2$) et ($14_2$) montés réspectivement sur le premier arbre d'entrée moteur (8) et le deuxiéme arbre intermédiaire (14).

4. Dispositif d'entrainement fléxible selon le préambule de la revendication 1 comprenant un troisiéme arbre d'entrée moteur supplémentaire (16),caractérisé en ce que le premier arbre d'entrée (8),le deuxiéme arbre d'entrée moteur (9),l'arbre de sortie secondaire (10) et la pompe hydraulique à cylindrée variable (5) sont transférés de leur place dans le carter principal du dispositif à l'avant du moteur thermique (1) tout en étant assemblés dans un même carter séparé et indépendant du carter principal,réalisé en une seule structure, auquel est accouplé d'une part un embrayage ($2_1$) dont l'entrée et la sortie de mouvement sont respectivement liés au deuxiéme arbre d'entrée moteur (9) et au villebrequin du moteur thermique (1) du véhicule,et d'autre paît la pompe hydraulique à cylindrée variable (5) qui est reliée à l'arbre de sortie secondaire (10),et en ce que le premier arbre d'entrée moteur (8),le deuxiéme arbre d'entrée moteur (9) ainsi transférés sont remplacés dans le carter principal du dispositif par le troisiéme arbre d'entrée moteur (16) portant un pignon ($16_1$) engrénant en permanence avec le pignon ($11_1$) solidaire du premier arbre de sortie (11).

5. Dispositif d'entrainement fléxible selon les revendications 1,2,et 3 caractérisé en ce qu'il comporte un étage supplémentaire comprenant un troisiéme arbre intermédiaire (17) monté libre en rotation dans le prolongement du deuxiéme arbre intermédiaire (14),un deuxiéme arbre moteur (18) dirigé perpendiculairement par rapport au troisiéme arbre intermédiaire (17),un troisiéme embrayage (19) accouplé au carter du dispositif et dont la sortie de mouvement est liée au deuxiéme arbre moteur (18),un deuxiéme moteur hydraulique à cylindrée variable (20) de cylindrée inférieure à celle du moteur hydraulique principal (7) relié à l'entrée de mouvement du troisiéme embrayage (19) et soutenu par une traverse fixée au chassis du véhicule.

6. Dispositif selon la revendication 5 caractérisé en ce que le deuxiéme moteur hydraulique (20) à cylindrée variable est remplacé par un moteur éléctrique (21) pour entrainer un certain type de véhicules selon les éxigences du parcours routier ou urbain.

7. Procédé pour la commande d'un dispositif d'entrainement fléxible selon le préambule de la revendication 1,caractérisé en ce que lors de l'établissement de la liaison mécanique entre le moteur thermique (1) et la boite de vitesses (4),il y a les étapes suivantes:

– Ouverture simultanée des embrayages (2) et (6),

– Déplacement automatique de la position de point mort à la position d'engrenage uniquement du synchroniseur ($12_2$) solidaire en rotation du deuxiéme arbre de sortie (12),les deux autres synchroniseurs ($14_2$) et ($8_2$) solidaires en rotation réspectivement du deuxiéme arbre intermédiaire (14) et du premier arbre d'entrée moteur (8) étant en position de point mort,

– Fermeture simultanée des embrayages (2) et (6),

de maniére à pouvoir entrainer directement la boite de vitesses (4) par le moteur thermique (1) du véhicule par l'intermédiaire de l'embrayage (2) et de la transmission mécanique reliant le premier arbre d'entrée moteur (8) et le premier arbre de sortie (12).

8. Procédé pour la commande d'un dispositif d'entrainement fléxible selon le préambule de la revendication 1 caractérisé en ce que lors de l'établissement de la liaison hydraulique,c'est à dire la liaison entre le moteur hydraulique principal (7) et la boite de vitesses (4),on établie les étapes suivantes:

– Ouverture simultanée des embrayages (2) et (6),

– Déplacement automatique de la position de point mort à la position d'engrenage des synchroniseurs $(8_2)$ et $(14_2)$ solidaires en rotation réspectivement du premier arbre d'entrée moteur (8) et du deuxiéme arbre intermédiaire (14) et en même temps déplacement automatique de la position d'engrenage à la position de point mort du synchroniseur $(12_2)$ solidaire en rotation du deuxiéme arbre de sortie (12),

– Fermeture automatique des embrayages (2) et (6),

de maniére à pouvoir entrainer la boite de vitesses (4) par le moteur hydraulique principal à cylindrée variable (7) par l'intermédiaire du deuxiéme embrayage (6) et d'une transmission mécanique reliant l'arbre moteur secondaire (15) et le deuxiéme arbre de sortie (12), tout en donnant au moteur thermique (1) du véhicule suralimenté correctement et qui entraine dans ce cas uniquement la pompe hydraulique (5) par l'intermédiaire de l'embrayage (2) et d'une transmission mécanique reliant l'arbre d'entrée moteur (8) et l'arbre de sortie secondaire (10) la possibilité de tourner à une vitesse constante,de façon à obtenir une éfficacité optimale et satisfaire les besoins de la transmission hydraulique,c'est à dire un débit important avec une pression élevée.

**Claims**

1. A flexible drive device of a high speed during hydraulic drive as well as during a classic one comprising an incorporated hydraulic transmission which is comprised of a hydraulic variable displacement pump (5) drived itself by a thermal motor (1) of a particular or commercial vehicle,and of a major hydraulic variable displacement motor (7) hydraulically drived itself by the hydraulic pump; this device comprisises a first input driving shaft (8) connected to a thermal motor (1) by a major clutch (2),a second input driving shaft (9),a secondary output shaft (10) connected to the hydraulic pump (5),a first output shaft (11),a second output shaft (12) connected to the input shaft of the gearbox (4),a first intermediate shaft (13),a second intermediate shaft (14),a secondary drive shaft (15) connected to the major hydraulic motor (7) by a second clutch (6); this device,which provides the vehicle with either a permanent hydraulic drive with high driving speed while driving the gearbox and the rest of the transmission elements of the vehicle by the major hydraulic variable displacement motor,or a classic drive,is characterized in that the two input driving shafts (8,9),the two output shafts(11,12), and the intermediate shafts (13,14) are erected into the continuations of one another,and in that the hydraulic pump (5) and the major hydraulic motor (7) are erected directly on the device while they are supported by a cross piece which is fixed to the chassis of the vehicle,and in that the first output shaft (11) and the second intermediate shaft (14) bear a pulley on one of their extremities.

2. This device,according to claim 1 is characterized in that the secondary output shaft (10) is ercted perpendicularly to the first input driving shaft (8) and to the second input driving shaft (9),while the secondary driving shaft (15) is erected perpendicularly to the first intermediate shaft (13) and to the second intermediate shaft(14).

3. This device,according to claims 1 and 2 is characterized in that each of the bevel pinions $(9_1,13_1)$,which form respectively an integral part of the second input driving shaft(9)and of the second intermediate shaft (13),have each auxiliary straight teeth and a conical surface which can cooperate with the straight teeth and the conical surfaces of the synchronizers $(8_2,14_2)$ erected respectively on the first input driving shaft(8) and on the second intermediate shaft (14).

4. The flexible drive device according to the preamble to claim 1 comprises an additionnal third input driving shaft (16),and is characterized in that the first input driving shaft (8),the second input driving shaft (9),the secondary output shaft (10) and the hydraulic variable displacement pump (5) are transferred from their place in the major casing of the device to the front of the thermal motor while they are assembled in the same casing which is separate from and independent of the major casing,which makes one independent block and to which is coupled on the one hand a clutch $(2_1)$ of which the input and the output motions are respectively connected to the second input driving shaft (9) and to the crankshaft of the thermal motor (1) of the vehicle,and on the other hand the hydraulic variable displacement pump (5) which is connected to the secondary output shaft (10),and in that the first input driving shaft (8),the second input driving shaft (9),thus transferred,are replaced in the major casing of the device by the third input driving shaft (16) which has a pinion $(16_1)$ meshing permenanently with pinion $(11_1)$ whith is an integral part of the first output shaft (11).

5. This flexible drive device,according to claims 1,2,and 3 is characterized in that it comprises an additional level which comprises itself a third intermediate shaft (17) erected in free rotation into the continuations of the second intermediate shaft (14),a second driving shaft (18) itself erected perpendicularly to the third intermediate shaft (17),a third cluth (19) coupled to the casing of the device and whose output motion is connected to the second driving shaft (18), a second hydraulic variable displacement motor (20),of a displacement inferior to that of the major hydraulic motor (7),connected to the input motion of the third cluth (19) and supported by a cross piece fixed to the chassis of the vehicle.

6. This device,according to claim 5 is characterized in that the second hydraulic variable displacement motor (20) is replaced by an electric motor (21) to drive certain types of vehicles depending on the demands of the distance covered in urban or highway routes.

7. The process to command the flexible drive device according the preamble to claim 1 is characterized in that during the establishing of the mechanical connection between the thermal motor (1) and the gearbox (4) we realize the following steps:
– simultaneous opening of the clutches (2) and (6),
– automatic shift from the dead center position to the meshing position uniquely of the synchronizer ($12_2$) erected on the second output shaft (12),the other two synchronisers ($14_2,8_2$) erected respectively on the second intermediate shaft (14) and on the first input driving shaft (8) being in the dead center position,
– simultaneous closing of the clutches (2,6),
in such a way as to drive directly the gearbox (4) by the thermal motor (1) of the vehicle by means of the clutch (2) and of the mechanic transmission connecting the first input driving shaft (8) and the first output shaft (12).

8. The process to command a flexible drive device according to the preambule to claim 1 is characterized in that during the establishing of the hydraulic drive,i.e the connection between the major hydraulic motor (7) and the gearbox (4),we realize the following steps:
– simultaneous opening of the clutches (2) and (6),
– automatic shift from the dead center position to the meshing position of the synchronizers ($8_2,14_2$) erected respectively on the first input driving shaft (8) and on the second intermediate shaft (14),and at the same time an automatic shift from the meshing position to the dead center position of the synchroniser ($12_2$) erected on the second output shaft (12),
– automatic closing of the clutches (2,6);
in such a way as to drive the gearbox (4) by the major hydraulic variable displacement motor (7) by means of the second clutch (6) and of a mechanical transmission connecting the secondary driving shaft (15) and the second output shaft (12),while enabling the thermal motor (1) of the vehicle which is correctly supercharged and which,in this case,drives only the hydraulic pump (5) by means of the clutch (2) and of a mechanical transmission connecting the input driving shaft (8) and the output secondary shaft (10),to rotate at a constant speed, in such a way as to obtain an optimal efficacity and satisfy the needs of the hydraulic transmission,i.e a considerable output with a high pressure.

**Patentansprüche**

1. Flexible Antriebsvorrichtung mit schnellem Gang bei hydraulischem Antrieb sowie bei klassischem Antrieb mit integriertem hydraulischem Getrieb,bestehend aus einer hydraulischen Pumpe mit verstellbarem Fördervolumen (5),die vom Verbrennungsmotor (1) des Nutzfahrzeugs angetrieben wird,und aus einem hydraulischen Hauptmotor mit verstellbarem Fördervolum (7),der von dieser letzten hydraulisch angtrieben wird,diese Vorrichtung umfaßt eine erste,mit dem Verbrennungsmotor (1) durch eine Hauptkupplung (2) verbundene Antriebswelle (8),eine zweite Antriebswelle (9),eine andere mit der hydraulischen Pumpe (5) verbundene Abtriebswelle (10),eine erste Abtriebswelle (11),eine zweite mit dem Schaltgehäuse (4) verbundene Abtriebswelle (12),eine erste Vorgelegewelle (13),eine zweite Vorgelegewelle (14),eine andere mit dem hydraulischen Hauptmotor durch eine zweite Kupplung (6) verbundene Antriebswelle (15),diese Vorrichtung erlaubt dem Fahrzeug sowohl einen fortlaufenden hydraulischen Antrieb mit erhöhter Geschwindigkeit,indem sie das Schaltgehäuse und die übrigen Elemente des Fahrzeugsgetriebes durch den hydraulischen Hauptmotor mit verstellbarem Fördervolumen antriebt,als auch einen Klassichen Antrieb,und wird dadurch gekennzeichnet,daß die beiden Antriebswellen (8,9),die beiden Abtriebswellen (11,12),und die beiden Vorgelegewellen (13,14) in der Verlängerung ineinandermontiert sind,und daß die hydraulische Pumpe (5) und der hydraulische Hauptmotor (7) direkt auf der Vorrichtung montiert sind,beide direkt durch einen an das Untergestell des Fahrzeugs montierten Querbalken gehalten werden, und daß die erste Abtriebswelle (11) und die zweite Vorgelegewelle (14) eine Riemenrolle an einem ihren äußeren Enden tragen.

2. Die Vorrichtung nach Anspruch 1 ist dadurch gekennzeichnet,daß die Abtriebswelle (10) senkrecht zur ersten Antriebswelle (8) und zur zweiten Antriebswelle (9) montiert sind,während der andere Antriebswelle (15) senkrecht zur ersten Vorgelegewelle (13) und zur zweiten Vorgelegewelle (14) montiert sind.

3. Die Vorrichtung nach den Ansprüchen 1 und 2 ist dadurch gekennzeichnet, daß die Kegelräder ($9_1$) und ($13_1$),die entsprechend mit der zweiten Antriebswelle (9) und der ersten Vorgelegewelle (13) zusammenhängen,jedes eine Geradverzahnung und eine konische Oberfläche aufweisen,welche mit den Geradverzahnungen und den konischen Oberflächen der Synchronisierglocken $(8_2,14_2)$ zusammenarbeiten können und entsprechend auf die erste Antriebswelle (8) und die zweite Vorgelegewelle(14) montiert sind.

4. Die flexible Antriebsvorrichtung nach der Präambel des Anspruch 1 umfaßt eine dritte,zusätzliche Antriebswelle (16),die sich dadurch kennzeichnet,daß die erste Antriebswelle (8),die zweite Antriebswelle (9),die andere Abtriebswelle (10) und die hydraulische Pumpe mit verstellbarem Fördervolumen (5) vom Hauptgehäuse des Antriebs in das Vorderteil des Verbrennungsmotors (1) verlegt und in ein und demslben Gehäuse zusammengefügt sind,getrennt und unabhängig vom Hauptgehäuse und ausgeführt in einem einzigen Gefüge,an welches einerseits eine Kupplung $(2_1)$ gekoppelt ist,deren Ein- und Ableitungsbewegung jeweils mit der zweiten Antrieswelle (9) und der Kurbelwelle des Verbrennungsmotors (1) des Fahrzeugs verbunden sind,und andererseits die hydraulische Pumpe mit verstellbaren Fördervolumen (5),die mit der Abtriebswelle (10) verbunden ist,und die sich des weiteren dadurch kennzeichnet daß die auf beschriebene Weise verlegte erste Antriebswelle (8) und zweite Antriebswelle (9) im Hauptgehäuse der Vorrichtung durch die dritte Antriebswelle (16) ersetzt werden,die ein Zahnrad $(16_1)$ trägt,welches fortwährend in das an der ersten Abtriebswelle (11) haftende Zahnrad $(11_1)$ greift.

5. Die flexible Antriebsvorrichtung nach den Ansprüchen 1,2, und 3 ist dadurch gekennzeichnet,daß sie eine zusätzliche Stufe aufweist,bestehend aus einer dritten Vorgelegewelle (17),montiert in freier Rotation in der Verlängerung der zweiten Vorgelegewelle (14),aus einem zweiten Antrieb (18),senkrecht zur dritten Vorgelegewelle (17) gelenkt,aus einer dritten Kupplung (19),die an das Antriebsgehäuse gekoppelt ist und deren Ableitungsbewegung mit dem zweiten Antrieb (18) verbrunden ist und aus einem zweiten hydraulischen Motor mit verstellbarem Fördervolumen (20),mit kleinerem Zylinderinhalt als der des hydraulischen Hauptmotors (7),welcher mit der Einleitungsbewegung der dritten Kupplung (19) verbunden ist und durch einen an das Untergestell des Fahrzeugs befestigten Querbalken gehalten wird.

6. Die flexible Antriebsvorrichtung nach dem Anspruch 5 ist dadurch gekennzeichnet,daß der zweite hydraulische Motor (20) mit verstellbarem Fördervolumen durch einen elektrischen Motor (21) ersetzt wird,um einem bestimmten fahrzeugtyp gemäß der Anforderungen des Stadt-oder Landstrassenverkehrs anzutreiben.

7. Das Steuerungsverfahren für eine flexible Antriebsvorrichtung nach der Präambel des Anspruch 1 läßt sich dadurch kennzeichnen,daß sich dem Vollzug der mechanischen Verbindung zweischen dem Verbrennungsmotor (1) und dem Schaltgehäuse (4) folgende Etappen anschließen:
– Gleichzeitige Öffnung der Kupplungen (2) und (6),
– Automatische Verschiebung vom Totpunktstand zum Eingriffsstand ausschließlich seitens der Synchronisierglocke (122),die auf die zweite Abtriebswelle (12) gesetzt ist,während die beiden anderen Synchronisierglocken $(14_2)$ und $(8_2)$,welche entsprechend auf die zweite Vorgelegewelle (14) und die erste Antriebswelle (8) montiert sind,sich im Totpunkstand befinden,
– Gleichzeitige Schließung der Kupplungen (2) und (6),dergestalt,daß das Schaltgehäuse (4) direkt durch den Verbrunnungsmotor (1) des Fahrzeugs angetrieben werden kann,durch Vermittlung der Kupplung (2) und des mechanischen Getriebes,welches die erste Antriebswelle (8) und die erste Abtriebswelle (12) miteinander verbindet.

8. Das Steuerungsverfahren für einen flexiblen Antriebsvorrichtung nach der Praämbel des Anspruch 1 läßt sich dadurch kennzeichnen,daß sich dem Vollzug der hydraulischen Verbindung,das heißt,der Verbindung zwischen dem hydraulischen Hauptmotor (7) und dem Schaltgehäuse (4) folgende Etappen anschließen:
– Gleichzeitige Öffnung der Kupplungen (2) und (6),
– Automatische Verschiebung vom Totpunktstand zum Eingriffsstand seitens der Synchronsierglocken $(8_2)$ und $(14_2)$,welche entsprechend auf die erste Antriebswelle (8) und die zweite Vorgelegewelle (14) montiert sind,und gleichzeitige Verschiebung vom Eingriffsstand zum Totpunktstand seitens der Synchronisierglocke $(12_2)$,welche auf die zweite Abtriebswelle (12) montiert ist,
– Automatische Schließung der Kupplungen (2) und (6),
dergestalt,daß das Schaltgehäuse (4) durch den hydraulischen Hauptmotor mit verstellbarem Fördervolumen (7) angetrieben werden kann,durch Vermittlung der zweiten Kupplung (6) und eines mechanischen Getriebes, welches den anderen Antrieb (15) und zweite Abtriebswelle (12) miteinander verbindet,so daß all diese Faktoren des normal aufgeladenen Verbrennungsmotors (1) des Fahrzeugs,und der in diesem Fall nur die hydraulische Pumpe (5) über die Kupplung(2) und dem mechanischen Getriebe, welches die Antriebswelle (8) und die andere Abtriebswelle(10) miteinander verbindet,antriebt,erlauben mit einer konstanten Geschwindigkeit zu drehen,und damit eine optimale Wirkung erreichen und den Erfordernissen des hydraulischen Getriebes gerecht werden,das heisst eine beträchtliche Leistung mit erhöhtem Druck.

Fig.1

Fig.2

Fig.3

Fig.4

Fig.5

Fig.6

Fig.7

EP 0 365 369 B1

Fig.8

26

33

34

32

31